# EUROPÄISCHE PATENTSCHRIFT

(11) **EP 0 734 908 B1**
(45) Veröffentlichungstag und Bekanntmachung des Hinweises auf die Patenterteilung: **23.10.2002**
(21) Anmeldenummer: 96103771.0
(22) Anmeldetag: 11.03.1996
(51) Int. Cl.: B60R 19/18

(54) **Stossfänger**
Bumper
Pare-choc

(30) Priorität: 31.03.1995 DE 19511868
(43) Veröffentlichungstag der Anmeldung: 02.10.1996
(73) Patentinhaber: DaimlerChrysler AG, 70567 Stuttgart (DE)
(72) Erfinder: Baumann, Karl-Heinz, 71149 Bondorf (DE); Otto, Andreas, 71296 Heimsheim (DE); Rathje, Klaus, 71032 Böblingen (DE)

(56) Entgegenhaltungen:
- EP-A- 0 249 518
- EP-A- 0 418 923
- WO-A-94/27841
- PATENT ABSTRACTS OF JAPAN vol. 018, no. 366 (M-1636), 11.Juli 1994 & JP 06 099781 A (NISSAN MOTOR CO LTD), 12.April 1994,
- PATENT ABSTRACTS OF JAPAN vol. 096, no. 002, 29.Februar 1996 & JP 07 277110 A (NISSAN MOTOR CO LTD), 24.Oktober 1995,

## Beschreibung

Die Erfindung bezieht sich auf einen Stoßfänger für eine zwei Längsträger aufweisende Fahrzeugkarosserie, gemäß dem Oberbegriff des Patentanspruchs 1, der aus der WO-A-94/27841 bekannt ist.

Bei einem bekannten Stoßfänger (DE 36 26 150 A1) sind die Verformungsglieder als Ovalringe aus glasfaserverstärktem Kunststoff gebildet, wobei sich die Längsmittelachse des Verformungsgliedes vertikal erstreckt und das Verformungsglied mit einer Wand am Längsträger der Fahrzeugkarosserie und mit der gegenüberliegenden Wand an der Rückseite des Biegeträgers anliegt und mittels Schrauben lösbar befestigt ist. Die so gestalteten Verformungsglieder sollen der Dämpfung dienen und weisen die besondere Eigenschaft auf, bei Überlastung nicht zu brechen, sondern durch Delaminieren der einzelnen Faserschichten Energie aufzunehmen. Durch diese Eigenschaft soll bewirkt werden, daß bei Aufprallgeschwindigkeiten oberhalb der Auslegungsgeschwindigkeit für den Stoßfänger die Längsträger gegen Beschädigung weitgehend geschützt sein sollen. Der Biegeträger ist als Rechteckkastenträger mit geschlossenem Hohlquerschnitt ausgebildet und ebenfalls aus glasfaserverstärktem Kunststoff hergestellt, wobei eine Kreuzbewehrung mit Endlosfasern oder Gewebe zur Aufnahme von Torsionskräften und Querkraftschub vorgesehen ist. Der Hohlraum des Biegeträgers kann außerdem mit Schaum ausgefüllt sein. Bei einem kleinen Auffahrunfall werden im wesentlichen nur die Verformungsglieder verformt, so daß sich eine Reparatur auf das Austauschen der Verformungsglieder beschränken kann, was durch die Schraubbefestigung relativ einfach möglich ist. Bei einem größeren Auffahrunfall verformen sich nicht nur die Verformungsglieder, sondern auch der Biegeträger. Bekannt ist ferner ein Stoßfänger eingangs genannter Art (DE 26 25 724 A1), bei dem die Verformungsglieder aus Hohlkörpern bestehen, deren Längsmittelachse in Verlängerung der Längsträger verläuft, wobei auch hierbei die Verformungsglieder an den Längsträgern und am Biegeträger lösbar mittels Schrauben befestigt sind. Der Biegeträger besteht aus einem C-Profil, dessen zu den Längsträgern gerichtete Öffnung durch ein Flachblech geschlossen ist.

Das Energieabsorptionsvermögen der vorstehend beschriebenen Stoßfänger bis hin zu einer Beschädigung des Längsträgers ist relativ gering, so daß nur bei Auffahrunfällen mit sehr niedrigen Geschwindigkeiten bis beispielsweise 5 km/h eine Schädigung der Längsträger vermieden werden kann. Auch sind die Verformungsglieder nur unzureichend in der Lage, bei dazu schräg gerichteten Schräganstößen eine Energieabsorption zu bewirken.

Aus der DE 35 10 590 C2 ist ein Stoßfänger bekannt, der aus zwei Halbschalen zusammengesetzt und unmittelbar an den Längsträgern der Fahrzeugkarosserie befestigt ist. Die Schenkel der U-förmigen Halbschalen nehmen in ihrer Breite zu den freien Enden des Stoßfängers ab, so daß die beiden Halbschalen in ihrer Ausgangslage vor ihrer Verbindung einander so gegenüberliegen, daß bei stirnseitiger Berührung der Schenkel im Bereich der Stoßfängermitte zwischen diesen ein zu den Enden hin sich kontinuierlich verbreiternder Spalt verbleibt. Zum Verschweißen werden die beiden Halbschalen miteinander verspannt, so daß der Spalt geschlossen wird. In den Halbschalen bauen sich damit Spannungen auf, die zu einer Verfestigung des Stoßfängers führen und sich im Belastungsfall günstig auf dessen Stabilität auswirken.

Der Erfindung liegt die Aufgabe zugrunde, einen Stoßfänger der eingangs genannten Art mit wesentlich größerem Energieabsorptionsvermögen zu schaffen.

Die Aufgabe ist bei einem Stoßfänger der im Oberbegriff des Anspruchs 1 definierten Art erfindungsgemäß durch die Merkmale im Kennzeichnungsteil des Anspruchs 1 gelöst.

Der erfindungsgemäße Stoßfänger hat den Vorteil, daß er ohne Verformung der Längsträger eine sehr viel größere Stoßenergie aufnehmen kann als der eingangs beschriebene bekannte Stoßfänger, da die gegenüber dem Biegeträger steiferen Verformungsglieder zunächst jegliche Stoßenergie von den Längsträgern fernhalten und erst nach Zusammenbruch des Biegeträgers energieverzehrend tätig werden. Damit können Stöße, die sich bei einer Fahrzeuggeschwindigkeit von bis zu 15 km/h ereignen, ohne Beschädigung der Längsträger aufgenommen werden. Die strukturseitige Instandsetzung des Fahrzeugs nach einem solchen Auffahrunfall ist ohne Schweißund Richtarbeiten kostengünstig durch einfaches Austauschen des Stoßfängers möglich. Dadurch, daß die Verformungsglieder mit dem Biegeträger einstückige, verformungssteife Hohlkörper bilden, ist aufgrund größerer Querschnitte eine größere Energieabsorption möglich. Ferner sind die Voraussetzungen für eine großvolumige und knickunempfindliche Bauweise bei der Gestaltung der mit dem Biegeträger einstückigen Verformungsglieder geschaffen, die sich gestalterisch den Bedürfnissen entsprechend so ausbilden lassen, daß eine Energieabsorption weitgehend unabhängig von der Belastungsrichtung ist, so daß auch bei Schräganstößen eine definierte Verformung möglich ist.

Vorteilhafte Ausführungsformen, zweckmäßige Weiterbildungen und Ausgestaltungen des Stoßfängers gemäß der Erfindung sind in den übrigen Ansprüchen wiedergegeben.

Die Flansche der beiden Halbschalen können horizontal oder auch vertikal verlaufen, wobei bei horizontalem Verlauf die Flansche aufeinanderliegen und bei vertikalem Verlauf die Flansche in vertikaler Richtung einander übergreifen können. Die Ausrichtung der Flansche hat den Vorteil, daß die Halbschalen aus einem einzigen Werkzeug gefertigt werden können. Dies gilt selbst dann, wenn die Formgebung der die Verformungsglieder bildenden Halbschalenwandteile in diesen Bereichen stärker vom übrigen Bereich des Biegeträgers, z.B. von dessen Mittelbereich, abweichen.

Durch die Merkmale im Anspruch 7 kann die Biegesteifigkeit und der Formänderungswiderstand des Stoßfängers gezielt beeinflußt werden. Durch die Merkmale in den Ansprüchen 8 und 9 ist erreichbar, daß der Biegeträger noch höher beansprucht werden kann, z.B. im Biegebereich zwischen den Längsträgeranbindungen.

Durch die Merkmale in den Ansprüchen 10 bis 13 kann das Energieabsorptionsvermögen der Verformungsglieder erhöht und in dieser Richtung je nach Art, Form und Dimensionierung der Verstärkungsteile gezielt beeinflußt werden.

Durch die Merkmale in Anspruch 14 und 15 ist die Verformungscharakteristik der Verformungsglieder und des Biegeträgers durch gezielte Versickungen beeinflußbar.

Weitere vorteilhafte Ausgestaltungen ergeben sich aus den Ansprüchen 16 und 17. Diese Formgestaltung zur Bildung der Verformungsglieder läßt sich auch als Auftulpung definieren, die als Verformungszone dient und zu höherer Energieabsorption durch größere Querschnitte und dazu führt, daß die Energieabsorption durch großvolumige knickunempfindliche Bauweise weitgehend unabhängig von der Belastungsrichtung ist, d.h. auch bei Schräganstößen eine definierte Verformung im Bereich der Verformungsglieder möglich ist.

Eine andere vorteilhafte Ausgestaltung ergibt sich aus Anspruch 18.

Die Erfindung ist nachfolgend anhand von in den Zeichnungen gezeigten Ausführungsbeispielen näher erläutert. Es zeigen:
- Fig. 1: eine schematische Draufsicht eines Stoßfängers gemäß einem ersten Ausführungsbeispiel für eine Fahrzeugkarosserie mit zwei Längsträgern,
- Fig. 2: einen schematischen Schnitt entlang der Linie II - II in Fig. 1,
- Fig. 3: eine schematische, teilweise horizontal geschnittene Draufsicht eines Stoßfängers gemäß einem zweiten Ausführungsbeispiel,
- Fig. 4: einen schematischen Schnitt entlang der Linie IV - IV in Fig. 3,
- Fig. 5: einen schematischen Schnitt entlang der Linie V - V in Fig. 3,
- Fig. 6: einen schematischen Schnitt entlang der Linie VI - VI in Fig. 3,
- Fig. 7: einen schematischen Schnitt etwa entsprechend demjenigen in Fig. 6 eines demgegenüber abgewandelten Ausführungsbeispieles,

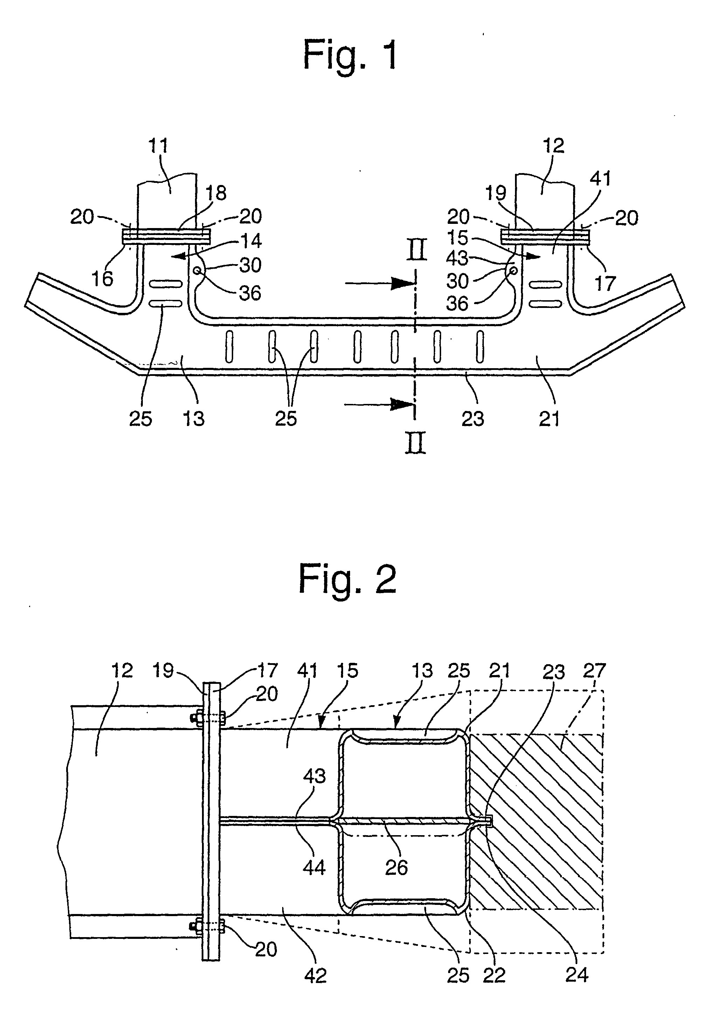

Der in Fig. 1 und 2 gezeigte Stoßfänger ist zum Anbau an eine Fahrzeugkarosserie vorgesehen, und zwar an deren Längsträgern 11, 12. Der Stoßfänger kann dabei an dem vorderen oder hinteren Stirnende der beiden Längsträger 11, 12 angeordnet werden. Der Stoßfänger weist einen Biegeträger 13 mit zwei von diesem quer, z.B. rechtwinklig, abstehenden Verformungsgliedern 14, 15 auf, die einstückig mit dem Biegeträger 13 sind. Am freien Ende der Verformungsglieder 14, 15 sind Befestigungsflansche 16, 17 vorgesehen, z.B. angeformt, die an entsprechend ausgebildeten Flanschen 18, 19 an den Längsträgern 11, 12 anliegen und mit diesen durch Schraubverbindungen 20 fest verbunden und über letztere davon ablösbar sind.

Der Stoßfänger, und zwar der Biegeträger 13 mit den beiden damit einstückigen Verformungsgliedern 14, 15, ist aus zwei im wesentlichen gleichen Halbschalen 21, 22 zusammengesetzt, die innerhalb einer in Anbaustellung horizontal verlaufenden Trennebene aufeinander liegen und mittels beim ersten Ausführungsbeispiel horizontal verlaufenden, umlaufenden Flanschen 23, 24 aufeinanderliegen und über diese fest miteinander verbunden sind. Die beiden Flansche 23, 24 sind beim ersten Ausführungsbeispiel parallel zur horizontalen Trennebene ausgerichtet. Statt dessen können diese auch vertikal ausgerichtet sein. Der Bereich der Halbschalen 21, 22, der die jeweiligen Verformungsglieder 14, 15 bildet, ist durch quer abstehende Halbschalenwandteile 41 und 42 gebildet, die beim zusammengesetzten Biegeträger jeweils verformungssteife Hohlkörper bilden. Die Flansche 23, 24 der Halbschalen 21, 22 gehen in gleichartige Flansche 43 und 44 der Halbschalenwandteile 41, 42 über.

Die beiden Halbschalen 21, 22 sind aus z.B. tiefgezogenem Stahl- oder Leichtmetallblech, z.B. aus Aluminium, hergestellt. Sie können statt dessen auch aus Leichtmetallguß gefertigt sein. Die feste Verbindung der Halbschalen 21, 22 im Bereich der Flansche 23, 24 und 43, 44 wird insbesondere durch Nieten erreicht, vor allem dann, wenn die Halbschalen 21, 22 aus Aluminium bestehen. Statt dessen kann die feste Verbindung der Halbschalen 21, 22 auch durch Schweißen, Druckfügen, Kleben, Schrauben od. dgl. realisiert werden. Als Schweißverfahren kommen Punkt-, Laser- oder MAG-Schweißen in Betracht. Der aus den beiden Halbschalen 21, 22 zusammengesetzte Verband aus Biegeträger 13 mit Verformungsgliedern 14, 15 ist so ausgelegt, daß die Verformungsglieder 14, 15 verformungssteifer als der Biegeträger 13 sind, so daß sie sich erst am Ende des Deformationsvermögens des Biegeträgers 13 unter weiterer Energieaufnahme verformen. Dieses Deformationsverhalten wird durch entsprechende Ausbildung der beiden Halbschalen 21, 22 herbeigeführt. Zusätzlich kann die Biegesteifigkeit und der Formänderungswiderstand durch gezielte Versickungen 25 in den Halbschalen 21, 22 und/oder durch vorzugsweise verzinkte Verstärkungsbleche 26 im Bereich des Biegeträgers 13 und/oder der beiden Verformungsglieder 14, 15 erreicht werden. Die Verstärkungsbleche 26 verlaufen z.B. horizontal und dabei innerhalb der Trennebene der Halbschalen 21, 22 und in der Ebene der Flansche 23, 24, wobei sich z.B. die einander gegenüberliegenden Schalenwände des Biegeträgers 13 über die Verstärkungsbleche 26 abstützen können. Zusätzlich dazu oder statt dessen können auch vertikal verlaufende Verstärkungsbleche vorgesehen sein oder andersgestaltete Verstärkungsteile im Biegeträger 13 und/oder den Verformungsgliedern 14, 15 vorgesehen sein. Im Bereich der Verformungsglieder 14, 15 kann auch eine nicht weiter gezeigte Aufnahme für eine geschraubte Abschleppöse vorgesehen sein.

Beim ersten Ausführungsbeispiel in Fig. 1 und 2 sind die beiden je ein Verformungsglied 14, 15 bildenden Halbschalenwandteile 41, 42 der Halbschalen 21, 22 als vom Biegeträger 13 etwa rechtwinklig abstehende und zu den Längsträgern 11, 12 hin weisende Längsteile ausgebildet, wodurch die Verformungsglieder als etwa hohlkastenförmige Stützen gestaltet sind. Bei einem anderen, nicht gezeigten Ausführungsbeispiel können diese als kastenförmigen Stützen ausgebildeten Verformungsglieder 14, 15 auch so abgeändert sein, daß deren Querschnitt sich über deren Länge ändert, und zwar über die Länge gesehen zunimmt oder abnimmt. Dies ist in Fig. 2 mit gestrichelten Linien angedeutet, wobei sich der Querschnitt der Verformungsglieder 14, 15 entweder vom Biegeträger 13 zu den Längsträgern 11, 12 hin verjüngt oder umgekehrt. In Fig. 2 ist ferner strichpunktiert angedeutet, daß an der Vorderseite des Biegeträgers 13 ein Pralldämpfer 27 aus aufgeschäumtem Kunststoff od. dgl. angeordnet ist, der z.B. auf die Flansche 23, 24 aufgesteckt ist. Der Pralldämpfer 27 baut durch Verformung Stoßenergie ab und schützt den Biegeträger 13 vor Beschädigung bei Stößen mit sehr kleinen Fahrzeuggeschwindigkeiten. Der Pralldämpfer 27 ist in der Lage, nach Energieabsorption durch Verformung sich wieder in seinen Ausgangszustand zurückzuverformen. Der Stoßfänger ist so gestaltet, daß bei Stößen mit sehr kleinen Fahrzeuggeschwindigkeiten zunächst eine Energieabsorption durch Verformung des dem Biegeträger 13 vorgeschalteten reversiblen Pralldämpfers 27 erfolgt. Bei größerer Stoßenergie erfolgt zunächst eine Durchbiegung und Verformung des Biegeträgers 13. Erst bei noch größerer Stoßenergie wird diese durch Verformung der Verformungsglieder 14, 15 aufgenommen, wobei es erst nach vollständiger Verformung der Verformungsglieder 14, 15 und nachfolgender Überlastung zu einer Verformung der Längsträger 11, 12 kommen kann.

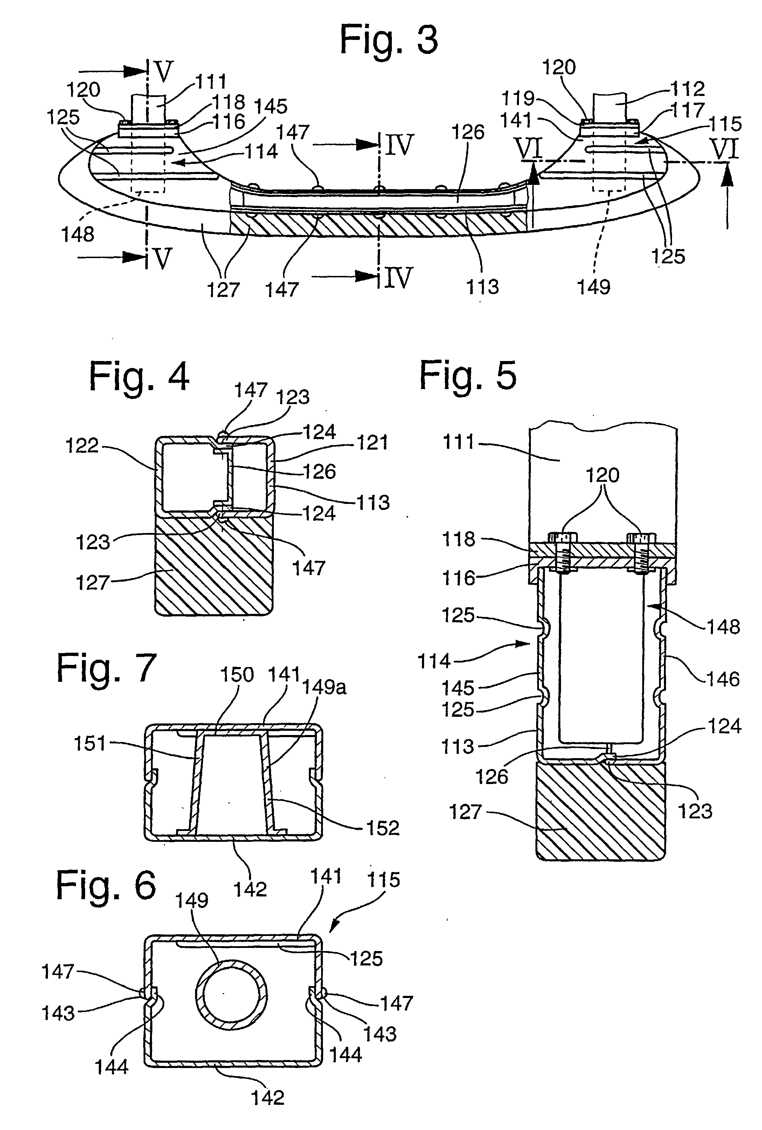

Bei dem in Fig. 3 bis 7 gezeigten zweiten Ausführungsbeispiel sind für die Teile, die dem ersten Ausführungsbeispiel in Fig. 1 und 2 entsprechen, um 100 größere Bezugszeichen verwendet, so daß dadurch auf die Beschreibung des ersten Ausführungsbeispieles Bezug genommen ist.

Auch beim zweiten Ausführungsbeispiel weisen die beiden Halbschalen 121, 122 auf der den Längsträgern 111, 112 zugekehrten Rückseite jeweils mit den Halbschalen 121, 122 einstückige, von diesen quer abstehende Halbschalenwandteile auf, von denen in Fig. 6 die Halbschalenwandteile 141 und 142 erkennbar sind, die das Verformungsglied 115 bilden. Aus Fig. 5 sind die beiden anderen Halbschalenwandteile 145, 146 ersichtlich, die das Verformungsglied 114 bilden. Bei zusammengebautem Stoßfänger bilden die Halbschalen 121, 122 den Biegeträger 113 und die Halbschalenwandteile 141, 142 das eine Verformungsglied 115 und die Halbschalenwandteile 145, 146 das andere Verformungsglied 114, wobei sich bei beiden Verformungsgliedern jeweils verformungssteife Hohlkörper besonderer Gestalt ergeben. Aus Fig. 3 ist ersichtlich, daß sich der Hohlkörperquerschnitt in Richtung zum rückwärtigen Flansch 116, 117 zumindest von beiden Seiten her verjüngt.

Umgekehrt betrachtet erweitert sich der Querschnitt ausgehend von den Flanschen 118, 119 etwa V-förmig. Betrachtet man den Querschnitt des Stoßfängers, ausgehend etwa von der Mitte des Biegeträgers 113, und dessen Verlauf folgend in Fig. 3 nach rechts, erkennt man, daß die vorderseitigen und rückwärtigen Wandteile sich zum Übergang in das Verformungsglied 115 erweitern. Die besondere Form des jeweiligen Verformungsgliedes 114, 115 läßt sich auch als Auftulpung beschreiben, betrachtet ausgehend von den Längsträgern 111, 112 in Richtung zum Biegeträger 113. Die Flansche 123, 124 der Halbschalen 121, 122 gehen in die Flansche 143, 144 der Halbschalenwandteile 141, 142 über, wie für das Verformungsglied 115 (Fig. 6) sichtbar ist. Die Flansche 123, 124 und 143, 144 verlaufen beim zweiten Ausführungsbeispiel quer zur horizontalen Trennebene, somit also etwa vertikal. Sie übergreifen einander, wobei die Flansche 124 und 144 der unteren Halbschale 122 bzw. des unteren Halbschalenwandteils 142 von den Flanschen 123, 143 der oberen Halbschale 121 und des oberen Halbschalenwandteiles 141 übergriffen werden. Die Flansche 123, 124, 143, 144 sind mit Vorteil über angedeutete Nieten 147 fest verbunden.

Im Biegeträger 113 und/oder in den Verformungsgliedern 114, 115 können Verstärkungsteile angeordnet sein, wie in Fig. 3 bei den Verformungsgliedern 114, 115 durch gestrichelte Verstärkungsteile 148, 149 angedeutet ist. Der Biegeträger 113 weist als Verstärkungsteil insbesondere in seinem Mittelbereich ein horizontales Verstärkungsblech 126 auf, das innerhalb der horizontalen Trennebene verläuft und sich an den gegenüberliegenden Schalenwänden, insbesondere an den Flanschen 124, abstützt. Das Verstärkungsblech 126 kann beidseitig abgebogene, von innen an den Flanschen 124 anliegende Randteile aufweisen und mit diesen Randteilen zusammen mit den Flanschen 123, 124 über die Nieten 147 befestigt sein. Durch das Verstärkungsblech 126 ist der Biegeträger 113 insbesondere in dessen Mittelbereich, im Querschnitt betrachtet, als Zweikammerprofil ausgebildet.

Die Verstärkungsteile 148, 149 im Bereich der Verformungsglieder 114, 115 können als Deformationselemente ausgebildet sein, die in Richtung des jeweiligen Längsträgers 111, 112 ausgerichtet sind und mit einem Ende zur Fahrzeugkarosserie hin abgestützt sind. Diese Verstärkungsteile 148, 149 sind z.B. als Profile oder Hohlkörper oder Vollkörper oder vertikale und/oder horizontale Stützwände od. dgl. ausgebildet. In Fig. 3, 5 und 6 ist bei dem dort gezeigten Ausführungsbeispiel angedeutet, daß die Verstärkungsteile 148, 149 z.B. als horizontal gerichtete Rohrprofile ausgebildet sein können.

Bei dem in Fig. 7 gezeigten abgewandelten Ausführungsbeispiel ist das Verstärkungsteil 149a als umgekehrt U-förmiges Profil ausgebildet, dessen U-Basis 150 an dem einen Halbschalenwandteil 141 und dessen U-Schenkel 151, 152 an dem anderen Halbschalenwandteil 142 jeweils in vertikaler Richtung abgestützt und daran z.B. durch Nieten od. dgl. befestigt sind.

Im Bereich der beiden Verformungsglieder 114, 115 sind gezielt oberseitige und/oder unterseitige Versickungen 125 vorgesehen, die etwa parallel zur Ausrichtung des Biegeträgers 113 verlaufen und über die die Verformungscharakteristik der aufgetulpten Verformungsglieder 114, 115 gezielt beeinflußbar ist.

Der Stoßfänger gemäß dem zweiten Ausführungsbeispiel hat in der Draufsicht gemäß Fig. 3 das Charakteristikum einer etwa keulenartigen Formgestaltung, betrachtet z.B. im Verlauf von der Mitte des Biegeträgers 113 ausgehend zu einer Außenseite hin. Die Anordnung ist so getroffen, daß die beiden je ein Verformungsglied 114, 115 bildenden Halbschalenwandteile 145, 146 bzw. 141, 142 der Halbschalen 121, 122 von einer im wesentlichen ebenen und vertikal verlaufenden Anbaufläche, repräsentiert durch den Befestigungsflansch 116, 117, ausgehend schräg oder im Bogen mit konvexer oder konkaver Krümmung in den den Biegeträger 113 bildenden Teil der Halbschalen 121, 122 übergehen. Diese vom Flansch 116, 117 ausgehende, nach vorn betrachtete Auftulpung je Verformungsglied 114, 115 dient als Verformungszone und ermöglicht durch relativ großen Querschnitt eine große Energieabsorption. Diese Energieabsorption ist durch großvolumige, knickunempfindliche Bauweise weitgehend unabhängig von der Belastungsrichtung, d.h. es ist auch bei Schräganstößen eine definierte Verformung der Verformungsglieder 114, 115 möglich. Bei allem ist der Stoßfänger gemäß dem zweiten Ausführungsbeispiel einfach in der Formgestaltung und daher kostengünstig herstellbar.

Beim ersten Ausführungsbeispiel in Fig. 1 sind an den Halbschalenflanschen 23, 24 Verbreiterungen 30 angedeutet, die Augen 36 zur Befestigung z.B. von Nebenaggregaten des Fahrzeuges od. dgl. tragen. Dies ist auch beim zweiten Ausführungsbeispiel in Fig. 3 bis 7 möglich. Z.B. können die Verformungsglieder 114, 115 auch eine nicht weiter gezeigte Aufnahme für eine geschraubte Abschleppöse aufweisen.

## Patentansprüche

1. Stoßfänger für eine zwei Längsträger aufweisende Fahrzeugkarosserie, der einen über die Karosseriebreite sich erstreckenden Biegeträger (13; 113) mit zwei in Abstand voneinander auf der der Fahrzeugkarosserie zugekehrten Rückseite des Biegeträgers von diesem quer abstehenden, fest mit dem Biegeträger verbundenen und mittels Schraubverbindungen (20; 120) an den Enden der Längsträger mit diesen fluchtend befestigbaren Verformungsgliedern aufweist, die verformungssteifer als der Biegeträger ausgebildet sind, so daß sie sich erst am Ende des Deformationsvermögens des Biegeträgers unter weiterer Energieaufnahme verformen,
**dadurch gekennzeichnet,**
**daß** der Biegeträger (13; 113) aus zwei im wesentlichen gleichen Halbschalen (21, 22; 121, 122) zusammengesetzt ist, die innerhalb einer in Anbaustellung horizontal verlaufenden Trennebene aufeinanderliegen und mittels Flanschen (23, 24; 123, 124) fest miteinander verbunden sind, und daß die beiden Halbschalen (21, 22; 121, 122) auf ihrer der Fahrzeugkarosserie zugewandten Rückseite zur Bildung der beiden Verformungsglieder (14, 15; 114, 115) jeweils mit den Halbschalen (21, 22; 121, 122) einstückige, von diesen quer abstehende Halbschalenwandteile (41, 42; 141, 142, 145, 146) aufweisen, die beim zusammengesetzten Biegeträger (13; 113) jeweils mit diesem einstückige verformungssteife Hohlkörper bilden.

2. Stoßfänger nach Anspruch 1,
**dadurch gekennzeichnet,**
**daß** die Flansche (23, 24; 123, 124) der Halbschalen (21, 22; 121, 122) in Flansche (43, 44; 143, 144) der Halbschalenwandteile (41, 42; 141, 142, 145, 146) übergehen und daß die Flansche (23, 24, 43, 44; 123, 124, 143, 144) quer zur Trennebene, insbesondere vertikal, verlaufen.

3. Stoßfänger nach Anspruch 1 oder 2,
**dadurch gekennzeichnet,**
**daß** die Flansche (123, 143) der oberen Halbschale (121) die Flansche (124, 144) der unteren Halbschale (122) vorzugsweise außen übergreifen.

4. Stoßfänger nach einem der Ansprüche 1 bis 3,
**dadurch gekennzeichnet,**
**daß** die Flansche (23, 24, 43, 44; 123, 124, 143, 144) über Nieten (147) miteinander verbunden sind.

5. Stoßfänger nach einem der Ansprüche 1 bis 3,
**dadurch gekennzeichnet,**
**daß** die Flansche (23, 24, 43, 44; 123, 124, 143, 144) durch Schweißen, z.B. Punkt-, Laser- oder MAG-Schweißen, Druckfügen, Kleben oder Schrauben miteinander verbunden sind.

6. Stoßfänger nach einem der Ansprüche 1 bis 5,
**dadurch gekennzeichnet,**
**daß** die beiden Halbschalen (21, 22; 121, 122) aus Metallblech oder Metallguß, insbesondere Leichtmetall, vorzugsweise Aluminium, gebildet sind.

7. Stoßfänger nach einem der Ansprüche 1 bis 6,
**dadurch gekennzeichnet,**
**daß** im Biegeträger (13; 113) und/oder in dessen Verformungsgliedern (14, 15; 114, 115) Verstärkungsteile (26; 126, 148, 149, 149a) angeordnet sind.

8. Stoßfänger nach Anspruch 7,
**dadurch gekennzeichnet,**
**daß** im Biegeträger (13; 113), insbesondere in dessen Mittelbereich, ein horizontales Verstärkungsteil (26; 126) angeordnet ist, das innerhalb der Trennebene verläuft und sich an gegenüberliegenden Schalenwänden der Halbschalen (21, 22; 121, 122) abstützt.

9. Stoßfänger nach Anspruch 7 oder 8,
**dadurch gekennzeichnet,**
**daß** der Biegeträger (13; 113), insbesondere in dessen Mittelbereich, im Querschnitt betrachtet als Zweikammerprofil ausgebildet ist.

10. Stoßfänger nach Anspruch 7,
**dadurch gekennzeichnet,**
**daß** die Verstärkungsteile (148, 149, 149a) im Bereich der Verformungsglieder (114, 115) als Deformationselemente ausgebildet sind, die in Richtung des jeweiligen Längsträgers (111, 112) ausgerichtet und mit einem Ende zur Fahrzeugkarosserie hin abgestützt sind.

11. Stoßfänger nach Anspruch 7 oder 10,
**dadurch gekennzeichnet,**
**daß** die Verstärkungsteile (148, 149, 149a) als Profile oder Hohlkörper oder Vollkörper oder vertikale und/oder horizontale Stützwände (150, 151, 152) ausgebildet sind.

12. Stoßfänger nach Anspruch 11,
**dadurch gekennzeichnet,**
**daß** die Verstärkungsteile (148, 149, 149a) als horizontal gerichtete Rohrprofile ausgebildet sind.

13. Stoßfänger nach Anspruch 11,
**dadurch gekennzeichnet,**
**daß** die Verstärkungsteile (149a) als U-förmige oder umgekehrt U-förmige Profile ausgebildet sind, deren U-Basis (150) an dem einen Halbschalenwandteil (141) und deren U-Schenkel (151, 152) an dem anderen Halbschalenwandteil (142) in vertikaler Richtung abgestützt sind und in Richtung des jeweiligen Längsträgers ausgerichtet sind.

14. Stoßfänger nach einem der Ansprüche 1 bis 13,
**dadurch gekennzeichnet,**
**daß** in den Halbschalen (21, 22; 121, 122) Versickungen (25; 125) angeordnet sind.

15. Stoßfänger nach einem der Ansprüche 1 bis 14,
**dadurch gekennzeichnet,**
**daß** die Halbschalen (21, 22; 121, 122) im Bereich der Verformungsglieder (14, 15; 114, 115) oberseitige und/oder unterseitige, z.B. etwa parallel zur Ausrichtung des Biegeträgers (13; 113) verlaufende, Versickungen (25; 125) aufweisen.

16. Stoßfänger nach einem der Ansprüche 1 bis 15, **gekennzeichnet durch**
eine etwa keulenartige Formgestaltung, betrachtet im Verlauf von der Biegeträgermitte aus zu einer Außenseite hin.

17. Stoßfänger nach einem der Ansprüche 1 bis 16,
**dadurch gekennzeichnet,**
**daß** die beiden je ein Verformungsglied (114, 115) bildenden Halbschalenwandteile (145, 146 bzw. 141, 142) der Halbschalen (121, 122) von einer im wesentlichen ebenen und vertikal verlaufenden, dem Anbau an die Stirnenden der Längsträger (111, 112) dienenden Anbaufläche, z.B. von einem Flansch (116, 117), ausgehend aufgetulpt sind oder schräg oder im Bogen mit konvexer oder konkaver Krümmung in den den Biegeträger (113) bildenden Teil der Halbschalen (121, 122) übergehen.

18. Stoßfänger nach einem der Ansprüche 1 bis 15,
**dadurch gekennzeichnet,**
**daß** die beiden je ein Verformungsglied (14, 15) bildenden Halbschalenwandteile (41, 42) der Halbschalen (21, 22) als etwa rechtwinklig abstehende und zur Fahrzeugkarosserie hin weisende Längsteile, vorzugsweise mit Kastenprofil, ausgebildet sind.

## Claims

1. Bumper for a vehicle body equipped with two side members, with a bumper bracket (13; 113) extending across the width of the body and fitted with two deformation members extending at a distance from each other at right angles from the rear of the bumper bracket facing the vehicle body, being fixed to the bumper bracket and attachable flush to the ends of the side members by means of screw connections (20; 120), said deformation members being more resistant to deformation than the bumper bracket, thus only deforming at the end of the deformability of the bumper bracket while absorbing further energy,
**characterised in that**
the bumper bracket (13; 113) comprises two substantially identical half-shells (21, 22; 121, 122) lying on top of each other within a separation plane extending horizontally in the installed position and firmly connected to each other by flanges (23, 24; 123, 124), and **in that** the two half-shells (21, 22; 121, 122) are provided, on their rear side facing the vehicle body, with half-shell wall sections (41, 42; 141, 142, 145, 146) integral with the half-shells (21, 22; 121, 122) and extending at right angles therefrom to form the two deformation members (14, 15; 114, 115), said half-shell wall sections forming hollow bodies resistant to deformation and integral with the bumper bracket (13; 113) on assembly.

2. Bumper according to claim 1,
**characterised in that**
the flanges (23, 24; 123, 124) of the half-shells (21, 22; 121, 122) turn into flanges (43, 44; 143, 144) of the half-shell wall sections (41, 42; 141, 142, 145, 146), and **in that** the flanges (23, 24, 43, 44; 123, 124, 143, 144) extend at right angles to the separation plane, in particular vertically.

3. Bumper according to claim 1 or 2,
**characterised in that**
the flanges (123, 143) of the upper half-shell (121) overlap the flanges (124, 144) of the lower half-shell (122), preferably externally.

4. Bumper according to any of claims 1 to 3,
**characterised in that**
the flanges (23, 24, 43, 44; 123, 124, 143, 144) are connected to each other by rivets (147).

5. Bumper according to any of claims 1 to 3,
**characterised in that**
the flanges (23, 24, 43, 44; 123, 124, 143, 144) are connected to each other by welding, for instance spot, laser or MAG welding, pressure joining, bonding or bolting.

6. Bumper according to any of claims 1 to 5,
**characterised in that**
the two half-shells (21, 22; 121, 122) are made of sheet metal or cast metal, in particular a light alloy, preferably aluminium.

7. Bumper according to any of claims 1 to 6,
**characterised in that**
reinforcing parts (26; 126, 148, 149, 149a) are installed in the bumper bracket (13; 113) and/or in its deformation members (14, 15; 114, 115).

8. Bumper according to claim 7,
**characterised in that**
a horizontal reinforcing part (26; 126) extending within the separation plane and supported on opposite shell walls of the half-shells (21, 22; 121, 122) is installed in the bumper bracket (13; 113), in particular in its central area.

9. Bumper according to claim 7 or 8,
**characterised in that**
the bumper bracket (13; 113), in particular its central area, is designed as a two-chamber profile when viewed in cross-section.

10. Bumper according to claim 7,
**characterised in that**
the reinforcing parts (148, 149, 149a) in the area of the deformation members (114, 115) are designed as deformation elements aligned in the direction of the side members (111, 112) and supported towards the vehicle body with one end.

11. Bumper according to claim 7 or 10,
**characterised in that**
the reinforcing parts (148, 149, 149a) are designed as sections or hollow bodies or solid bodies or vertical and/or horizontal supporting walls (150, 151, 152).

12. Bumper according to claim 11,
**characterised in that**
the reinforcing parts (148, 149, 149a) are designed as horizontally aligned tubular sections.

13. Bumper according to claim 11,
**characterised in that**
the reinforcing parts (149a) are designed as U- or reverse U-sections, the U-base (150) being supported on one half-shell wall section (141), while the U-legs (151, 152) are supported on the other half-shell wall section (142) in the vertical direction and aligned in the direction of the associated side members.

14. Bumper according to any of claims 1 to 13,
**characterised in that**
lock-beads (25; 125) are arranged in the half-shells (21, 22; 121, 122).

15. Bumper according to any of claims 1 to 14,
**characterised in that**
the half-shells (21, 22; 121, 122) are provided with lock-beads (25; 125) extending, for instance, approximately parallel to the alignment of the bumper bracket (13; 113) on their upper and/or lower side in the area of the deformation members (14, 14; 114, 115).

16. Bumper according to any of claims 1 to 15,
**characterised in that**
the design has the approximate shape of a club if viewed from the centre of the bumper bracket towards one outer side.

17. Bumper according to any of claims 1 to 16,
**characterised in that**
each half-shell wall section (145, 146 or 141, 142 respectively) of the half-shells (121, 122) forming a deformation member (114, 115), starting at a substantially level and vertical mounting face, such as a flange (116, 117) for mounting to the end faces of the side members (111, 112), becomes tulip-shaped or turns into the part of the half-shells (121, 122) forming the bumper bracket (113) at an angle or with convex or concave curvature.

18. Bumper according to any of claims 1 to 15,
**characterised in that**
each half-shell wall section (41, 41) of the half-shells (21, 22) forming a deformation member (14, 15) is designed as a longitudinal part, preferably a box section, extending at approximately right angles towards the vehicle body.

## Revendications

1. Pare-chocs, pour une carrosserie de véhicule présentant deux longerons, qui présente une poutre de flexion (13 ; 113) qui s'étend sur la largeur de la carrosserie, avec deux éléments de déformation qui, situés à une certaine distance l'un de l'autre sur la face arrière, orientée vers la carrosserie de véhicule, de la poutre de flexion, saillent transversalement de cette poutre de flexion, sont solidarisés avec la poutre de flexion, peuvent être fixés, au moyen de liaison par vis (20 ; 120), aux extrémités des longerons, dans l'alignement de ceux-ci, et qui sont conçus pour être plus rigides en déformation que la poutre de flexion, de sorte qu'ils ne se déforment qu'à la fin du pouvoir de déformation de la poutre de flexion, sous un apport d'énergie complémentaire, **caractérisé par le fait, que** le pare-chocs (13 ; 113) est composé de deux demi-coques (21, 22 ; 121, 122) sensiblement identiques, qui reposent l'une sur l'autre à l'intérieur d'un plan de séparation orienté horizontalement en position de montage et sont solidarisées l'une à l'autre au moyen de rebords (23, 24 ; 123, 124), et que les deux demi-coques (21, 22 ; 121, 122) présentent chacune, sur leur face arrière orientée vers la carrosserie de véhicule, pour former les deux éléments de déformation (14, 15 ; 114, 115), des parties de paroi de demi-coque (41, 42 ; 141, 142, 145, 146) qui sont d'une pièce avec les demi-coques (21, 22 ; 121, 122), saillent transversalement de celles-ci et, la poutre de flexion (13 ; 113) étant assemblée, forment avec celle-ci des corps creux d'une pièce, rigides en déformation.

2. Pare-chocs selon la revendication 1, **caractérisé par le fait que** les rebords (23, 24 ; 123, 124) des demi-coques (21, 22 ; 121, 122) se transforment en rebords (43, 44 ; 143, 144) des parties de paroi des demi-coques (41, 42 ; 141, 142, 145, 146) et que les rebords (23, 24, 43, 44 ; 123, 124, 143, 144) sont orientés transversalement par rapport au plan de séparation, en particulier verticalement.

3. Pare-chocs selon la revendication 1 ou 2, **caractérisé par le fait que** les rebords (123, 143) de la demi-coque supérieure (121) passent de préférence à l'extérieur, par-dessus les rebords (124, 144) de la demi-coque inférieure (122).

4. Pare-chocs selon l'une des revendications 1 à 3, **caractérisé par le fait que** les rebords (23, 24, 43, 44 ; 123, 124, 143, 144) sont reliés l'un à l'autre par des rivets (147).

5. Pare-chocs selon l'une des revendications 1 à 3, **caractérisé par le fait que** les rebords (23, 24, 43, 44 ; 123, 124, 143, 144) sont reliés par soudage, par exemple par soudage par points, par soudage au laser ou par soudage à l'arc avec électrode consommable sous protection de gaz actifs MAG, par joint étanche, par collage ou par vissage.

6. Pare-chocs selon l'une des revendications 1 à 5, **caractérisé par le fait que** les deux demi-coques sont formées de tôle métallique ou d'une pièce métallique moulée, en particulier en métal léger, de préférence en aluminium.

7. Pare-chocs selon l'une des revendications 1 à 6, **caractérisé par le fait que** dans la poutre de flexion (13 ; 113) et/ou dans ses éléments de déformation (14, 15 ; 114, 115) sont disposées des pièces de renfort (26 ; 126, 148, 149, 149a).

8. Pare-chocs selon la revendication 7, **caractérisé par le fait que** dans la poutre de flexion (13 ; 113), en particulier dans sa zone médiane, est disposée une pièce de renfort horizontale (26 ; 126) qui passe dans le plan de séparation et s'appuie sur les parois, situées en face l'une de l'autre, des demi-coques (21, 22 ; 121, 122).

9. Pare-chocs selon la revendication 7 ou 8, **caractérisé par le fait que** la poutre de flexion (13 ; 113), considérée en coupe, en particulier dans sa zone médiane, est conçue sous forme d'un profilé à deux chambres.

10. Pare-chocs selon la revendication 7, **caractérisé par le fait que** les pièces de renfort (148, 149, 149a) sont, dans la zone des éléments de déformation (114, 115), conçues sous forme d'éléments de déformation orientés selon la direction du longeron respectif (111, 112) et s'appuyant par une extrémité sur la carrosserie du véhicule.

11. Pare-chocs selon la revendication 7 ou 10, **caractérisé par le fait que** les pièces de renfort (148, 149, 149a) sont conçues sous forme de profilés ou de corps creux ou de corps pleins ou de parois d'appui verticales et/ou horizontales (150, 151, 152).

12. Pare-chocs selon la revendication 11, **caractérisé par le fait que** les pièces de renfort (148, 149, 149a) sont conçues sous forme de profilés tubulaires orientés horizontalement.

13. Pare-chocs selon la revendication 11, **caractérisé par le fait que** les pièces de renfort (149a) sont conçues sous forme de profilés en U ou de profilés en U inversé, dont la base du U (150) s'appuie sur l'une des parties de paroi (141) des demi-coques et dont les branches du U (151, 152) s'appuient contre l'autre partie de paroi (142) des demi-coques et sont orientées selon la direction du longeron respectif.

14. Pare-chocs selon l'une des revendications 1 à 13, **caractérisé par le fait que** dans les demi-coques (21, 22 ; 121, 122) sont disposés des soyages (25 ; 125).

15. Pare-chocs selon l'une des revendications 1 à 14, **caractérisé par le fait que** les demi-coques (21, 22 ; 121, 122) présentent, dans la zone des éléments de déformation (14, 15 ; 114, 115), des soyages (25 ; 125) en surface supérieure et/ou en surface inférieure, orientés par exemple à peu près parallèlement à l'orientation de 1a poutre de flexion (13 ; 113).

16. Pare-chocs selon l'une des revendications 1 à 15, **caractérisé par** une réalisation à peu près en forme de massue, vu du milieu de la poutre de flexion vers un côté extérieur.

17. Pare-chocs selon l'une des revendications 1 à 16, **caractérisé par le fait que** les deux parties de paroi (145, 146 ou 141, 142) des demi-coques (121, 122) formant un élément de déformation (114, 115) s'emboîtent à partir d'une surface de montage sensiblement plane orientée verticalement, servant au montage sur les extrémités frontales des longerons (111, 112), par exemple d'un flasque (116, 117) ou bien se transforment, obliquement ou de flexion, avec une courbure convexe ou concave en la partie des demi-coques (121, 122) qui forme la poutre de flexion (113).

18. Pare-chocs selon l'une des revendications 1 à 15, **caractérisé par le fait que** les deux parties de paroi (41, 42) des demi-coques (21, 22) formant un élément de déformation (14, 15) sont conçues sous forme de pièces longitudinales saillant à peu près perpendiculairement et orientées vers la carrosserie de véhicule, de préférence avec profil en caisson.
